Europäisches Patentamt

European Patent Office

Office européen des brevets

(19)

(11) **EP 0 792 686 A1**

(12) **DEMANDE DE BREVET EUROPEEN**

(43) Date de publication:
03.09.1997 Bulletin 1997/36

(51) Int Cl.$^6$: **B01J 29/08**

(21) Numéro de dépôt: **97400404.6**

(22) Date de dépôt: **24.02.1997**

(84) Etats contractants désignés:
**DE ES FR IT NL**

(30) Priorité: **27.02.1996 FR 9602533**

(71) Demandeur: **Institut Français du Pétrole
92852 Rueil-Malmaison Cedex (FR)**

(72) Inventeurs:
• **Benazzi, Eric
78360 Montesson (FR)**
• **Mignard, Samuel
78400 Chatou (FR)**

(54) **Catalyseur comprenant un phyllosilicate 2:1 dioctaédrique prepar en milieu fluorure et procédé d'hydroconversion de charges pétrolières**

(57) L'invention concerne un catalyseur comprenant au moins un élément catalytique, et un support renfermant 20-99% pds d'au moins une matrice, 1-80% pds d'au moins un phyllosilicate 2:1 dioctaédrique contenant du fluor et 0-30% pds d'au moins une zéolithe Y.

L'élément catalytique appartient aux groupes VI et/ou VIII. Du phosphore peut-être présent.

L'invention concerne également un procédé d'hydroconversion utilisant ledit catalyseur.

## Description

La présente invention concerne un catalyseur comprenant au moins un élément catalytique et un support renfermant au moins un phyllosilicate 2:1 dioctaédrique contenant du fluor, éventuellement et de préférence ponté, au moins une matrice et éventuellement au moins une zéolithe Y de structure faujasite. L'invention concerne également un procédé d'hydroconversion de charges pétrolières lourdes utilisant ce catalyseur.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que celle issue du craquage catalytique.

Les catalyseurs utilisés en hydrocraquage sont tous du type bifonctionnels associant une fonction acide à une fonction hydrogénante. La fonction acide est apportée par des supports de grandes surfaces (150 à 800 $m^2.g^{-1}$ généralement) présentant une acidité superficielle, telles que les alumines halogénées (chlorées ou fluorées notamment), les combinaisons d'oxydes de bore et d'aluminium, les silices-alumines amorphes et les zéolithes. La fonction hydrogénante est apportée soit par un ou plusieurs métaux du groupe VIII de la classification périodique des éléments, tels que fer, cobalt, nickel, ruthénium rhodium, palladium, osmium, iridium et platine, soit par une association d'au moins un métal du groupe VI de la classification périodique tels que chrome, molybdène et tungstène et au moins un métal du groupe VIII.

L'équilibre entre les deux fonctions acide et hydrogénante est le paramètre fondamental qui régit l'activité et la sélectivité du catalyseur. Un fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs très actifs mais présentant une mauvaise sélectivité en distillats moyens. Le choix judicieux de chacune des fonctions est un problème à résoudre pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus.

Les catalyseurs conventionnels de l'hydrocraquage catalytique sont, pour leur grande majorité, constitués de supports faiblement acides, tels les silice-alumines amorphes par exemple. Ces systèmes sont utilisés pour produire des distillats moyens de très bonne qualité, en encore, lorsque leur acidité est très faible, des bases huiles.

Dans les supports peu acides, on trouve la famille des silice-alumines amorphes. Beaucoup de catalyseurs du marché de l'hydrocraquage sont constitués de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les travaux de recherche effectués par le demandeur sur de nombreuses zéolithes et solides microporeux cristallisés l'ont conduit à découvrir que, de façon surprenante, un catalyseur contenant au moins un phyllosilicate 2:1 dioctaédrique contenant du fluor , et de préférence synthétisé en milieu fluorure et de préférence ponté, associé éventuellement et avantageusement à une zéolithe Y de structure faujasite, permet d'obtenir une sélectivité en distillats moyens nettement améliorée par rapport aux catalyseurs connus dans l'art antérieur.

Les phyllosilicates 2:1 dioctaédriques sont des minéraux qui résultent de l'empilement de feuillets élémentaires. Chaque feuillet comprend deux couches tétraédriques situées de part et d'autres d'une couche octaèdrique. La couche tétraèdrique est à base de tétraèdres $\Delta O_4$, 3 sommets sur 4 sont communs à deux tétraèdres et un sommet est libre, ce qui donne la formule $\Delta O_{(3/2+1)}$, $\Delta$ représente une cavité tétraèdrique et O un atome d'oxygène. La couche octaédrique est à base d'octaèdres $\square O_6$, les 6 sommets sont communs à 3 tétraèdres, ce qui donne la formule $\square O_{6/3}$, $\square$ représente une cavité octaédrique. En limitant le contenu du feuillet à une demi-maille, 4 tétraèdres $\Delta_4 O_{(6+4)}$ sont situés deux à deux de part et d'autre de 3 octaèdres $\square_3 O_6$ et ont en commun 4 sommets : $\Delta_4 \square 3 O_{(12)}$. Deux atomes O de la couche octaédrique ne participent pas à cette mise en commun et sont saturés par des atomes H : $\Delta_4 \square 3 O_{10}(OH)_2$. Le plus souvent les cavités tétraédriques $\Delta$ sont occupées par des atomes de silicium et 2 cavités octaédriques $\square$ sur 3 par des atomes d'aluminium : $Si_4Al_2 \square O_{10}(OH)_2$. Cet édifice est électriquement neutre.

De plus, l'élément silicium tétraédrique peut être subsitué en totalité ou en partie par des éléments trivalents tels que par exemple l'aluminium ou le gallium. De même, l'élément aluminium octaédrique peut être substitué par des éléments divalents (Mg ou Fe par exemple) et/ou monovalents (Li par exemple). Ces substitutions confèrent des char-

EP 0 792 686 A1

ges négatives à l'édifice. Celles-ci entraînent l'existence de cations de compensation échangeables situés dans l'espace interfoliaire (espace entre chaque feuillet élémentaire). L'épaisseur de l'espace interfoliaire dépend de la nature des cations de compensation et de leur état d'hydratation. Cet espace est d'ailleurs capable d'accueillir d'autres espèces chimiques comme de l'eau, des amines, des sels, des alcools, des bases, etc....

L'existence de groupes -OH entraîne une instabilité thermique due à la réaction de déshydroxylation d'équation : $2\ \text{-OH} \rightarrow \text{-O-} + H_2O$. A cet égard l'introduction, lors de la synthèse, de l'élément fluor dans la structure en place des groupes O-H conduit à des phyllosilicates de stabilité thermique nettement améliorée.

La formule chimique générale (pour une demi-maille) des phyllosilicates 2:1 dioctaédriques synthétisés en milieu fluorure avant pontage est la suivante :

$$M^{m+}_{x/m}\ ((Si_{(4-x)}T_x(T_2\ \square_1)O_{10}(OH_{(2-y)}F_y)^{x-}$$

- où T représente un élément choisi dans le groupe IIIA et le fer,
- où M est au moins un cation de compensation issu du milieu réactionnel ou introduit par au moins un procédé d'échange ionique, choisi dans le groupe formé par les cations des éléments des groupes IA, IIA et VIII de la classification périodique des éléments, les cations des terres rares (cations d'éléments de numéro atomique de 57 à 71 inclus), les cations organiques contenant de l'azote (parmi lesquels les alkylammonium et les arylammonium et le cation ammonium), le proton .
- où m est la valence du cation M,
- où x est un nombre compris entre 0 et 2,
- y un nombre supérieur à 0 et inférieur ou égal à 2,
- et $\square$ représente une cavité octaédrique.

Le diagramme de diffraction des rayons X est caractérisé par la présence des raies suivantes :

- une raie correspondant à une valeur de $d_{hkl}$ égale à $1,49 \pm 0,01\ 10^{-10}$ m ;
- deux autres raies à des valeurs de $d_{hkl}$ égales à 4,46 $\pm 0,02\ 10^{-10}$ m et $2,56 \pm 0,015\ 10^{-10}$ m ;
- au moins une réflexion 001 telle que $d_{001}$ soit égal à 12,5 $\pm 3\ 10^{-10}$ m suivant la nature du cation de compensation et son état d'hydratation à l'humidité considérée.

De préférence, la teneur en fluor telle que le rapport molaire F/Si est compris entre 0,1 et 4.

Le phyllosilicate 2:1 dioctaédrique présente de plus au moins un signal à -133 ppm ($\pm$ 5ppm) en RMN, rotation à l'angle magique, du $^{19}F$.

Lesdits phyllosilicates sont synthétisés en milieu fluoré en présence de l'acide HF et à un pH inférieur à 9, et de préférence compris entre 0,5 et 6,5.

La préparation de ce type de solides en milieu fluorure et leur caractérisation sont décrites dans le brevet FR-A-2.673.930 et dans une publication à la 202ème réunion de l'American Chemical Society (ACS) de New-York en août 1991 dont le contenu a été publié dans Synthesis of Microporous Materials, Extended clays and other Microporous Solids (1992). L'enseignement de ces références est inclus dans la présente description.

L'invention englobe également tout type de phyllosilicate 2:1 dioctaédrique contenant du fluor. Ce fluor peut être amené à la synthèse ou après la synthèse. Toute méthode de préparation convient, et on emploiera très avantageusement celle décrite précédemment.

Ces phyllosilicates 2:1 dioctaédrique peuvent être pontés par toutes les techniques connues de l'homme de l'art mais plus particulièrement par le procédé de pontage mis au point par le demandeur et décrit dans les brevets FR-A-2.720.386 et FR-A-2.720.387 dont l'enseignement est inclus dans la présente description. Ce procédé comprend au moins un traitement comprenant une première étape de mise en contact d'une solution de polycations et du phyllosilicate à ponter comprenant des cations échangeables, formant ainsi le mélange réactionnel ; puis une deuxième étape où l'on laisse se dérouler l'échange entre les polycations et les cations échangeables du phyllosilicate : et enfin une troisième étape où l'on sépare le produit obtenu par filtration et où on le lave ; ledit traitement étant caractérisé en ce que :

- la masse d'argile à ponter par volume total de solution est comprise entre 1 et 200 g/l.
- la deuxième étape d'échange se fait à une température comprise entre 15 et 100°C ; ladite deuxième étape a une durée comprise entre 1 minute et 3 heures.
- le temps de séparation de la troisième étape est compris entre 20 secondes et 60 minutes par litre de solution contenant en suspension le produit à séparer.

Ce procédé de pontage permet d'introduire simplement et rapidement par exemple des polycations $[Al_{13}O_4(OH)_{24}$ $(H_2O)_{12}]^{7+}$ encore appelés ions Keggin, ou bien des polycations contenant au moins un élément choisi dans le groupe formé par le zirconium, le titane, le molybdène et le vanadium, tels que et à tire d'exemples non limitatifs : $[Zr_4(OH)_8$ $(H_2O)_{16}]^{8+}$, ou bien encore $[ZrOCl_2 Al_8(OH)_{20}]^{4+}$.

Le catalyseur de la présente invention peut aussi renfermer une zéolithe Y de structure faujasite (Zéolite Molecular Sieves Structure, chemistry and uses, D.W. BRECK, J. WILLEY and Sons 1973). Parmi les zéolithes Y que l'on peut utiliser, on emploiera de préférence une zéolithe Y stabilisée, couramment appelée ultrastable ou USY soit sous forme au moins partiellement échangée avec des cations métalliques, par exemple des cations des métaux alcalino-terreux et/ou des cations de métaux de terres rares de numéro atomique 57 à 71 inclus, soit sous forme hydrogène.

Une zéolithe acide HY est particulièrement avantageuse et est caractérisée par différentes spécifications : un rapport molaire $SiO_2/Al_2O_3$ compris entre environ 8 et 70 et de manière préférée entre environ 12 et 40 : une teneur en sodium inférieure à 0,15% poids déterminée sur la zéolithe calcinée à 1100°C; un paramètre cristallin a de la maille élémentaire compris entre $24,55 \times 10^{-10}$ m et $24,24 \times 10^{-10}$ m et de manière préférée entre $24,38 \times 10^{-10}$ m et $24,26 \times 10^{-10}$ m; une capacité CNa de reprise en ions sodium, exprimée en gramme de Na par 100 grammes de zéolithe modifiée, neutralisée puis calcinée, supérieure à environ 0,85 ; une surface spécifique déterminée par la méthode B.E.T supérieure à environ 400 $m^2/g$ et de préférence supérieure à 550 $m^2/g$, une capacité d'adsorption de vapeur d'eau à 25°C pour une pression partielle de 2,6 torrs (soit 34,6 MPa), supérieure à environ 6%, une répartitition poreuse comprenant entre 1 et 20% et de préférence entre 3 et 15% du volume poreux contenu dans des pores de diamètre situé en tre $20 \times 10^{-10}$ m et $80 \times 10^{-10}$ m, le reste du volume poreux étant contenu dans les pores de diamètre inférieur à $20.10^{-10}$ m.

Le catalyseur de la présente invention renferme également au moins une matrice habituellement amorphe ou mal cristallisée choisie par exemple dans le groupe formé par l'alumine, la silice, la magnésie, l'oxyde de titane, la zircone, les phosphates d'aluminium, de titane ou de zirconium, les combinaisons de deux au moins de ces composés et les combinaisons alumine-oxyde de bore.

La matrice est de préférence choisie dans le groupe formé par la silice, l'alumine, la magnésie, les combinaisons silice-alumine, les combinaisons silice-magnésie.

Le support du catalyseur de la présente invention renferme donc :

a) de 20 à 99%, ou encore de 30 à 96%, de préférence de 40 à 90% et de manière encore plus préférée de 50 à 85% en poids de matrice(s),
b) de 1 à 80 %, ou encore de 4 à 70%, de préférence de 10 à 60% et de manière encore plus préférée de 15 à 50% en poids de phyllosilicate(s) 2:1 dioctaédrique(s) synthétisé en milieu fluorure éventuellement ponté,
c) de 0 à au plus 30%, ou encore de 0,1 à 30%, de préférence de 0 à au plus 20% ou encore de 0,1 à 20% et de manière encore plus préférée de 0 à au plus 10% ou encore de 0,1 à 10% de zéolithe(s) Y de structure faujasite, forme hydrogène, ayant de préférence les caractéristiques données ci-avant.

Le catalyseur de la présente invention peut être préparé par toutes les méthodes bien connues de l'homme du métier. Une des méthodes préférées dans la présente invention consiste à malaxer un phyllosilicate 2:1 dioctaédrique synthétisé en milieu fluorure et éventuellement ponté, et éventuellement une zéolithe Y dans un gel humide d'alumine pendant quelques dizaines de minutes, puis à passer la pâte ainsi obtenue à travers une filière pour former des extrudés de diamètre compris entre 0,4 et 4 mm.

Le catalyseur renferme également au moins un élément catalytique, par exemple un métal ayant une fonction hydro-déshydrogénante. La fonction hydro-déshydrogénante est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et/ou VIII est comprise entre 1 et 40% en poids de catalyseur et de préférence entre 3 et 30% avantageusement entre 8 et 40%, voire 10 à 40% et mieux 10-30%, et le rapport pondéral exprimé en oxyde métallique en métal (ou métaux) du groupe VI sur métal (ou métaux) du groupe VIII est compris entre 1.25 et 20 et de préférence entre 2 et 10. De plus, ce catalyseur peut contenir du phosphore. La teneur en phosphore, exprimée en concentration en oxyde de phosphore $P_2O_5$, sera avantageusement inférieure à 15 % en poids et de préférence inférieure à 10% en poids.

La fonction hydrogénante telle qu'elle a été définie précédemment (éléments du groupe VIII ou association d'éléments des groupes VI et VIII) peut être introduite dans le catalyseur à divers niveaux de la préparation et de diverses manières.

Elle peut être introduite en partie seulement (cas par exemple des associations groupes VI et VIII) ou en totalité au moment du malaxage du phyllosilicate 2:1 dioctaédrique synthétisé en milieu fluorure et éventuellement pontée avec le gel d'oxyde choisi comme matrice. Elle peut être introduite par une ou plusieurs opérations d'échange ionique sur le support calciné à base du phyllosilicate 2:1 dioctaédrique synthétisé en milieu fluorure et éventuellement ponté dispersé dans la matrice choisie, à l'aide de solutions contenant les sels précurseurs des métaux choisis et surtout pour les sels d'éléments du groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VI (notamment le molybdène ou le tungstène) ont été préalablement introduits au moment du malaxage du support. Elle peut enfin être introduite par une ou plusieurs opérations d'imprégnation du support, avantageusement préalablement mis en forme, calciné, à base d'un phyllosilicate 2:1 dioctaédrique synthétisé en milieu fluorure et éventuellement ponté et de la matrice, par une ou des solutions contenant les précurseurs des oxydes de métaux des groupes VI et/ou VIII, les précurseurs des oxydes de métaux de groupe VIII étant de préférence introduits après ceux du groupe VI ou éventuellement en même temps que ces derniers.

Dans le cas où les oxydes des métaux sont introduits en plusieurs imprégnations des sels précurseurs correspondants de préférence, une étape de calcination intermédiaire du catalyseur devra être effectuée à une température comprise entre 250 et 600 °C.

L'imprégnation du molybdène peut être facilitée par ajout d'acide phosphorique dans les solutions de paramolybdate d'ammonium.

Les catalyseurs ainsi obtenus sont utilisés pour l'hydrocraquage de coupes lourdes, et présentent une activité améliorée par rapport à l'art antérieur, et ont de plus une sélectivité améliorée pour la production de distillats moyens de très bonne qualité.

Les charges employées dans le procédé sont par exemple des gazoles, des distillats sous vide, des gazoles sous vide, des résidus désasphaltés ou hydrotraités ou équivalents. Les charges fortement chargées en N et S ont été de préférence préalablement hydrotraitées. Elles sont de préférence constituées pour au moins de 80% en volume de composés dont les points d'ébullition sont d'au moins 350°C, de préférence entre 350 et 580°C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5 000 ppm poids et la teneur en soufre entre 0,01 et 5% poids. Les conditions de l'hydrocraquage telles que, température, pression, taux de recyclage d'hydrogène, vitesse volumique horaire, pourront être très variables en fonction de la nature de la charge, de la qualité des produits désirés, des installations dont dispose le raffineur.

Les températures sont en général supérieures à 230 °C et souvent comprises entre 300 °C et 480 °C. et de préférence inférieures à 450 °C. La pression est supérieure ou égale à 2 MPa et en général supérieure à 3 MPa voire 10 MPA, et inférieure à 30 MPa. La quantité d'hydrogène est généralement au minimum de 100 l/l de charge et souvent comprise entre 260 et 3 000 litres d'hydrogène par litre de charge. La vitesse volumique horaire est comprise en général entre 0,2 et 10 h$^{-1}$.

Les résultats qui importent au raffineur sont l'activité et la sélectivité en distillats moyens. Les objectifs fixés doivent être réalisés dans des conditions compatibles avec la réalité économique. Ainsi le raffineur cherche-t-il à diminuer la température, la pression, la quantité d'hydrogène et à maximiser la vitesse volumique horaire. Il est connu que la conversion peut être augmentée par une élévation de température, mais c'est souvent au détriment de la sélectivité. La sélectivité en distillats moyens s'améliore avec une augmentation de la pression ou de la quantité d'hydrogène, mais ceci au détriment de l'économie du procédé. Ce type de catalyseur permet d'atteindre dans des conditions de marche classique des sélectivités en distillats moyens de point d'ébullition compris entre 150°C et 380°C supérieures à 65%, et ceci pour des niveaux de conversion, en produits de point d'ébullition inférieur à 380°C, supérieurs à 55% en volume. Dans des conditions moins sévères d'hydrocraquage doux, les sélectivités en distillats moyens sont supérieures à 65% (et généralement supérieures à 75%) pour des niveaux de conversion supérieurs à 30%, établis généralement vers 40-50%, et plus souvent inférieurs à 55%. Ce catalyseur présente de plus, dans ces conditions, une stabilité remarquable. Enfin, du fait de la composition du catalyseur, celui-ci est facilement régénérable.

Les exemples suivants illustrent la présente invention sans toutefois en limiter la portée.

Exemple 1 : Préparation du phyllosilicate 2:1 dioctaèdrique ponté PP1 entrant dans la composition du catalyseur C1 conforme à l'invention

Pour cette préparation à 36g d'eau distillée, on ajoute successivement et conformément aux indications fournies :

- 0,31 g du sel NaF (Prolabo) sous agitation modérée,
- 0,66 g de l'acide HF à 40% (Fluka),
- 2,35 g de l'oxyde AlOOH (Catapal B Vista) sous agitation vigoureuse,
- 2,50 g de l'oxyde $SiO_2$ pulvérulent (Aerosil 130 de Degussa), sous agitation modérée.

La composition de l'hydrogel ainsi préparé, rapportée à une mole de l'oxyde $SiO_2$ est :

1,0 $SiO_2$ ; 0,382 $Al_2O_3$ ; 0,177 NaF; 0,20 HF ; 48 $H_2O$ soit en termes de rapport molaire :

Si/Al = 1,309
$Na^+$/Si = 0,177
F/Si = 0,497
HF/Si = 0,32
$H_2O$/Si = 48

Cette composition ne tient pas compte de l'eau apportée par la source d'aluminium et par l'acide HF.

L'hydrogel ainsi obtenu est mûri 4 heures à la température ambiante (20°C) sous agitation modérée. Le pH est alors voisin de 5.

La cristallisation s'effectue ensuite dans un autoclave en acier, chemisé par un revêtement de téflon, d'une contenance de 120 ml, à 220°C, sous pression autogène durant 168 heures sans agitation. L'autoclave est ensuite refroidi à l'air ambiant.

Le pH de fin de synthèse est d'environ 4.

Le produit est ensuite récupéré, filtré et lavé abondamment à l'eau distillée. Il est alors séché à 40-50°C durant 24 heures.

Au bout de ces 24 heures, le produit obtenu, à 50% d'humidité relative, est caractérisé par son diagramme de diffraction des rayons X indiqué ci-après :

| $d_{hkl}$ (Å) | I/Io |
|---|---|
| 12,42 | 100 |
| 6,22 | 6 |
| 4,46 | 55 |
| 2,55 | 21 |
| 2,48 | 15 |
| 2,25 | 2 |
| 2,22 | 3,5 |
| 1,74 | 5 |
| 1,73 | 6 |
| 1,69 | 13 |
| 1,66 | 7 |
| 1,62 | 2 |
| 1,48 | 20 |

Ce diffractogramme est caractéristique de celui des phyllosilicates 2:1 dioctaédriques selon l'invention.

Les propriétés de gonflement du phyllosilicate obtenu sont reportées dans le tableau ci-dessous :

| | HR 50% | HR 80% | 14% glycérol dans l'éthanol |
|---|---|---|---|
| $d_{hkl}$ (A) | 12,4 | 15,5 | 17,6 |

HR : humidité relative.

La teneur pondérale en fluor du phyllosilicate obtenu est de 3,15%.

Un signal à -133 ppm est présent dans le spectre de RMN, rotation à l'angle magique, du $^{19}$F du phyllosilicate préparé selon cet exemple.

Le phyllosilicate 2:1 dioctaèdrique ainsi préparé est dénommé P1. Ce dernier va ensuite subir une étape de pontage selon la mode opératoire décrit ci-après.

8 g du phyllosilicate 2:1 dioctaèdrique ainsi préparé et dénommé P1 sont directement mis en solution dans 148 ml d'une solution d'ions Keggin $[Al_{13}O_4(OH)_{24}(H_2O)_{12}]^{7+}$ dont la concentration est de l'ordre de $9.10^{-3}$ mol/l et le pH égal à 4. A titre d'exemple cette solution est préparée suivant le mode opératoire publié par Urabe K. et al, Advanced Materials 3 n° 11, (1991).

La masse d'argile à ponter par volume total de solution est donc de 54 g/l. Le rapport R, défini comme le rapport entre la quantité de polycations engagé multipliée par la charge du polycation et la quantité de sodium présente dans la beidellite, est de 1.

Après une durée d'échange de 7 minutes sous agitation à température ambiante et une étape de filtration de 1 minute, le produit est lavé à l'eau distillée, pendant 2 minutes, puis séché à 90 °C durant une nuit (15 heures environ). La masse de phyllosilicate ponté après échange d'ions et séchage à 60 °C est de 0,85 g. La distance réticulaire $d_{001}$ est de l'ordre de 1,92 nm et la surface spécifique mesurée par la méthode BET est de l'ordre de 265 $m^2$/g. Après 5 heures de calcination à 550 °C sous air, l'argile pontée ainsi préparée présente une distance réticulaire $d_{001}$ de l'ordre de 1,83 nm et une surface spécifique BET de l'ordre de 230 $m^2$/g.

Le phyllosilicate 2:1 dioctaèdrique ponté par des polycations $[Al_{13}O_4(OH)_{24}(H_2O)_{12}]^{7+}$ ainsi préparé est dénommé PP1

Exemple 2

Préparation du catalyseur C1 (conforme à l'invention)

Le phyllosilicate 2:1 dioctaèdrique PP1 tel que décrit dans l'exemple 1 est malaxé avec de l'alumine de type SB3 fournie par la société Condéa. La pâte malaxée est ensuite extrudée à travers une filière de diamètre 1,4 mm. Les extrudés sont imprégnés à sec par une solution d'un mélange d'heptamolybdate d'ammonium, de nitrate de nickel et d'acide orthophosphorique, et enfin calcinés sous air à 550 °C in-situ dans le réacteur où ils se trouvent sous forme de lit fixe. Les teneurs pondérales en oxydes actifs sont les suivantes (par rapport au catalyseur) :

| 2,5 % | en poids d'oxyde de phosphore $P_2O_5$ |
| 15 % | en poids d'oxyde de molybdène $MoO_3$ |
| 5 % | en poids d'oxyde de nickel NiO |

La teneur en argile pontée dans l'ensemble du catalyseur est de 40%.

Exemple 3

Préparation du catalyseur C2 (non conforme à l'invention).

Le phyllosilicate 2:1 dioctaèdrique PP1 tel que décrit dans l'exemple 1 et une zéolithe H-Y de paramètre de maille 24,30Å sont malaxés avec de l'alumine de type SB3 fournie par la société Condéa.

La pâte malaxée est ensuite extrudée à travers une filière de diamètre 1,4 mm. Les extrudés sont imprégnés à sec par une solution d'un mélange d'heptamolybdate d'ammonium, de nitrate de nickel et d'acide orthophosphorique, et enfin calcinés sous air à 550 °C in-situ dans le réacteur où ils se trouvent sous forme de lit fixe. Les teneurs pondérales en oxydes actifs sont les suivantes (par rapport au catalyseur) :

| 2,5 % | en poids d'oxyde de phosphore $P_2O_5$ |
| 15 % | en poids d'oxyde de molybdène $MoO_3$ |
| 5 % | en poids d'oxyde de nickel NiO |

La teneur en argile pontée dans l'ensemble du catalyseur est de 35%. poids et la teneur en zéolithe H-Y est de 5% poids.

Exemple 4

Préparation du catalyseur C3 (non conforme à l'invention).

On utilise une silice-alumine préparée au laboratoire contenant 25 % en poids de $SiO_2$ et 75 % en poids de $Al_2O_3$.

On ajoute 3 % en poids d'acide nitrique pur à 67 % par rapport au poids sec de poudre de silice alumine afin d'obtenir la peptisation de la poudre. Après malaxage, la pâte obtenue est extrudée à travers une filière de diamètre 1,4 mm. Les extrudés sont calcinés puis imprégnés à sec par une solution d'un sel de chlorure de platine tétramine $Pt(NH_3)_4Cl_2$ et enfin calcinés sous air à 550 °C. La teneur en platine du catalyseur final est de 0,6 % en poids.

Exemple 5

Evaluation des catalyseurs C1, C2 et C3 dans un test d'hydrocraquage.

Les catalyseurs C1 et C2 dont les préparations sont décrites dans les exemples précédents sont utilisés dans les conditions de l'hydrocraquage sur une charge pétrolière dont les principales caractéristiques sont les suivantes :

| point initial | 277 °C |
|---|---|
| point 10 % | 381 °C |
| point 50 % | 482 °C |
| point 90 % | 531 °C |
| point final | 545 °C |
| point d'écoulement | + 39 °C |
| densité (20/4) | 0,919 |
| Soufre (% poids) | 2,46 |
| Azote (ppm poids) | 930 |

L'unité de test catalytique comprend un réacteur en lit fixe, à circulation ascendante de la charge ("up-flow"), dans lequel est introduit 80 ml de catalyseur. Chacun des catalyseurs est sulfuré par un mélange n-hexane/DMDS + aniline jusqu'à 320 °C. La pression totale est de 9 MPa, le débit d'hydrogène est de 1000 litres d'hydrogène gazeux par litre de charge injectée, la vitesse volumique horaire est de $1,0h^{-1}$.

Les performances catalytiques sont exprimées par la température qui permet d'atteindre un niveau de conversion brute de 70 % et par la sélectivité brute. Ces performances catalytiques sont mesurées sur le catalyseur après qu'une période de stabilisation, généralement au moins 48 heures, ait été respectée.

La conversion brute CB est prise égale à :

$$CB = \frac{\% \text{ poids } 380^- \text{ effluents}}{100}$$

La sélectivité brute SB est prise égale à :

$$SB = \left( \frac{\text{poids } 150/380^- \text{ effluents}}{\text{poids } 380^- \text{ effluents}} \right) * 100$$

| N° exemple | T (°C) (70 % CB) | SB (70 % CB) |
|---|---|---|
| Catalyseur C1 conforme | 419 | 72,1 |
| Catalyseur C2 conforme | 410 | 71,8 |
| Catalyseur C3 non conforme | 438 | 74 |

e

L'utilisation d'un phyllosilicate 2:1 dioctaèdrique ponté par des polycations $[Al_{13}O_4(OH)_{24}(H2O)_{12}]^{7+}$ permet de diminuer la température de conversion brute CB d'une façon substantielle puisqu'un gain de 19°C environ est observé entre le catalyseur avec phyllosilicate 2:1 dioctaèdrique ponté par des polycations $[Al_{13}O_4(OH)_{24}(H2O)_{12}]^{7+}$ (catalyseur C1) et le catalyseur n'en contenant pas (catalyseur C3).

D'une façon générale, la sélectivité varie fortement avec la conversion. La sélectivité est d'autant plus élevée que la

EP 0 792 686 A1

conversion est faible. L'utilisation d'un tel phyllosilicate 2:1 dioctaèdrique ponté permet donc un gain substantiel de température d'iso-conversion sans que cela soit au détriment de la sélectivité en distillats moyens.

L'utilisation d'un phyllosilicate 2:1 dioctaèdrique ponté conjointement à une zéolithe H-Y (catayseur C2) permet aussi d'obtenir une diminution de la température de conversion brute CB, (gain de 9 °C) par rapport au catalyseur non conforme C3, sans que cela soit au détriment de la sélectivité en distillats moyens.

Exemple 6

Evaluation des catalyseurs C1 et C3 dans un test d'hydrocraquage basse pression.

Les catalyseurs C1 et C3 ont été comparés dans un test d'hydrocraquage basse pression également appelé hydrocraquage doux. La charge utilisée lors du test catalytique est la même que celle utilisée dans l'exemple 5.

L'unité de test catalytique comprend un réacteur en lit fixe, à circulation ascendante de la charge ("up-flow"), dans lequel est introduit 80 ml de catalyseur. Chacun des catalyseurs est sulfuré par un mélange n-hexane/DMDS + analine jusqu'à 320 °C. La pression totale est de 5 MPa, le débit d'hydrogène est de 500 litres d'hydrogène gazeux par litre de charge injectée, la vitesse volumique horaire est de 0,5h$^{-1}$.

Les performances catalytiques sont exprimées par conversion brute obtenue à une température donnée (ici, 400 °C) et par la sélectivité brute pour une conversion brute égale à 50 %. Ces performances catalytiques sont mesurées sur le catalyseur après qu'une période de stabilisation, généralement au moins 48 heures, ait été respectée.

La conversion brute CB est prise égale à :

$$CB = \frac{\% \text{ poids } 380^{-} \text{ effluents}}{100}$$

La sélectivité brute SB est prise égale à:

$$SB = \left( \frac{\text{poids } 150/380^{-} \text{ effluents}}{\text{poids } 380^{-} \text{ effluents}} \right) * 100$$

| N° exemple | CB à 400 °C | SB (50 % CB) |
|---|---|---|
| Catalyseur C1 conforme | 42,2 | 81,4 |
| Catalyseur C3 non conforme | 38,3 | 81,0 |

L'utilisation d'un phyllosilicate 2:1 dioctaèdrique ponté (catalyseur C1 de l'exemple 2), permet un gain en conversion de 3,9 % environ à 400 °C par rapport au catalyseur n'en contenant pas (catalyseur C3 de l'exemple 4). La sélectivité obtenue pour 50 % de conversion brute est légèrement supérieure dans le cas du catalyseur C1 de l'exemple 2, à la sélectivité enregistrée dans le cas du catalyseur à base de silice-alumine (catalyseur C3 de l'exemple 4). Ces résultats montrent donc que le catalyseur contenant phyllosilicate 2:1 dioctaèdrique ponté présente une sélectivité légèrement supérieure à celle d'une silice-alumine et surtout une activité plus forte.

**Revendications**

1. Catalyseur comprenant

   - un support renfermant 20-99% pds d'au moins une matrice, 1-80% pds d'au moins un phyllosilicate 2:1 dioctaédrique contenant du fluor, et 0-30% pds d'au moins une zéolithe Y,
   - et au moins un élément catalytique.

2. Catalyseur selon la revendication 1, dans lequel l'élément catalytique est choisi parmi les éléments des groupes VI et/ou VIII, et le catalyseur contient 1-40% pds dudit (desdits) élément(s).

9

3. Catalyseur selon l'une des revendications précédents, renfermant également du phosphore.

4. Catalyseur selon la revendication 3 renfermant moins de 15% de phosphore.

5. Catalyseur selon l'une des revendications précédentes, dans lequel le support contient 0,1-30% d'au moins une zéolithe Y.

6. Catalyseur selon l'une des revendications précédentes, dans lequel le phyllosilicate 2:1 dioctaédrique a été synthétisé en milieu fluorure

7. Catalyseur selon l'une des revendications précédentes, dans lequel le phyllosilicate 2:1 dioctaédrique présente :

   a) la formule chimique générale approchée suivante (pour une demi-maille) :

$$M^{m+}{}_{x/m} ((Si_{(4-x)} T_x) (T_2 \ \square_{.1}) O_{10} \ (OH_{(2-y)} F_y) )^{x-}$$

   où T représente un élément choisi dans le groupe formé par le IIIA de la classification périodique des éléments et le fer,

   où M est au moins un cation de compensation issu du milieu réactionnel, ou introduit par au moins un procédé d'échange ionique, choisi dans le groupe formé par les cations des éléments des groupes IA, IIA et VIII de la classification périodique des éléments, le proton, les cations organiques contenant de l'azote, le cation ammonium, les cations des terres rares ;

   où m est la valence du cation M ;

   où x est un nombre compris entre 0 et 2 ; y est un nombre supérieur à 0 et inférieur ou égal à 2 et $\square$ représente une cavité octaédrique.

   b) un diagramme de diffraction des rayons X caractérisé par la présence des raies suivantes :

   - une raie correspondant à une valeur de $d_{hkl}$ égale à :
        $1,49 \pm 0,01 \ 10^{-10}$m

   - deux autres raies à des valeurs de $d_{hk1}$ égales à :
        $4,46 \pm 0,02 \ 10^{-10}$ m et $2,56 + 0,015 \ 10^{-10}$ m

   - au moins une réflexion 001 telle que $d_{001}$ soit égal à :
        $12,5 \pm 3 \ 10^{-10}$ m suivant la nature du cation de compensation et son état d'hydratation à l'humidité considérée.

   c) une teneur en fluor telle que le rapport molaire F/Si est compris entre 0,1 et 4 ;

   d) au moins un signal à - 133 ppm ($\pm$ 5ppm) en RMN, rotation à l'angle magique, du $^{19}$F.
        lesdits phyllosilicates ayant été synthétisés en milieu fluoré en présence de l'acide HF et à un pH inférieure à 9.

8. Catalyseur selon la revendication 7, dans lequel le pH de synthèse est compris entre 0,5 et 6,5.

9. Catalyseur selon l'une des revendications précédentes, dans lequel le phyllosilicate 2:1 dioctaédrique est ponté.

10. Catalyseur selon la revendication 9, dans lequel le phyllosilicate 2:1 dioctaédrique est ponté par un procédé comprenant au moins un traitement comprenant une première étape de mise en contact d'une solution de polycations et de phyllosilicate à ponter comprenant des cations échangeables, formant ainsi le mélange réactionnel; puis une deuxième étape où l'on laisse se dérouler l'échange entre les polycations et les cations échangeables du phyllosilicate ; et enfin une troisième étape où l'on sépare le produit obtenu par filtration et où on le lave ; ledit traitement étant caractérisé en ce que :

- la masse de phyllosilicate à ponter par volume total de solution est comprise entre 1 et 200 g/l,
- la deuxième étape d'échange se fait à une température comprise entre 15 et 100° C ; ladite deuxième étape a une durée comprise entre 1 minute et 3 heures,
- le temps de séparation de la troisième étape est compris entre 20 secondes et 60 minutes par litre de solution contenant en suspension le produit à séparer.

11. Catalyseur selon l'une des revendications 9 ou 10, dans lequel les polycations utilisés sont des polycations $[Al_{13}O_4(OH)_{24}(H_2O)_{12}]_{7+}$ ou des polycations contenant au moins un élément choisi dans le groupe formé par le zirconium, le titane, le molybdène et le vanadium, ou les polycations $[Zr_4(OH)_8(H_2O)_{16}]^{8+}$ ou les polycations $[ZrOCl_2 Al_8(OH)_{20}]^{4+}$

12. Catalyseur selon l'une des revendications précédentes, dans lequel le support du catalyseur renferme de 20 à 99% pds de matrice(s), de 1 à 80% pds de phyllosilicate(s) 2:1 dioctaédrique(s), et de 0 à 30% pds de zéolite(s) Y.

13. Catalyseur selon l'une des revendications précédentes, dans lequel le support du catalyseur renferme de 30 à 96% pds de matrice(s), de 4 à 70% pds de phyllosilicate(s) 2:1 dioctaédrique(s) et de 0 à 20% de zéolite(s) Y.

14. Catalyseur selon l'une des revendications précédentes, dans lequel le support de catalyseur renferme de 50 à 85% de matrice(s), de 15 à 50% de phyllosilicate(s) 2:1 dioctaédrique(s) et de 0 à 10% de zéolithe(s) Y.

15. Catalyseur selon l'une des revendications précédentes, dans lequel la matrice est choisie dans le groupe formé par l'alumine, la silice, la magnésie, l'oxyde de titane, la zircone, les phosphates d'aluminium, les phosphates de titane, les phosphates de zirconium, les combinaisons alumine-oxyde de bore.

16. Catalyseur selon l'une des revendications précédentes, préparé par imprégnation du support mis en forme et calciné, avec au moins une solution contenant le(s) élément(s) du groupe VI, et, simultanément ou après, avec au moins une solution contenant le(s) élément(s) du groupe VIII, puis calcination finale.

17. Procédé d'hydrocraquage de coupes lourdes à une température supérieure à 230°C, une pression supérieure à 2 MPa, une quantité d'hydrogène d'au moins 100l/l de charge, une vitesse volumique de $0.2\text{-}10 \text{ h}^{-1}$, et avec un catalyseur selon l'une des revendications 1 à 16.

Office européen
des brevets

**RAPPORT DE RECHERCHE EUROPEENNE**

Numero de la demande

EP 97 40 0404

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 219 174 A (AKZO NV) 22 Avril 1987 * colonne 3, ligne 42 - colonne 5, ligne 10 * <br> --- | | B01J29/08 |
| A | EP 0 692 307 A (ENICHEM AUGUSTA IND) 17 Janvier 1996 <br> --- | | |
| A | US 5 023 221 A (OCCELLI MARIO L) 11 Juin 1991 <br> --- | | |
| A | DATABASE WPI <br> Section Ch, Week 9207 <br> Derwent Publications Ltd., London, GB; <br> Class A14, AN 92-053997 <br> XP002017837 <br> & JP 04 001 250 A (MIZUSAWA CHEMICAL IND KK) , 6 Janvier 1992 <br> * abrégé * <br> ----- | | |

**DOMAINES TECHNIQUES RECHERCHES (Int.Cl.6)**

B01J

Le présent rapport a été établi pour toutes les revendications

| Lieu de la recherche | Date d'achèvement de la recherche | Examinateur |
|---|---|---|
| LA HAYE | 29 Avril 1997 | Thion, M |